# DEMANDE DE BREVET EUROPEEN

(11) **EP 2 407 329 A1**
(43) Date de publication de la demande: **18.01.2012**
(21) Numéro de dépôt: 10007205.7
(22) Date de dépôt: 13.07.2010
(51) Int. Cl.: B60H 1/32

(54) **Système de refroidissement à absorption**

(71) Demandeur: Ecoclim SA, 1950 Sion (CH)
(72) Inventeur: La désignation de l'inventeur n'a pas encore été déposée
(74) Mandataire: Cronin, Brian Harold John

(57) **Abrégé**

La présente invention porte sur un dispositif de refroidissement à absorption notamment pour un véhicule à moteur. Le dispositif comporte un générateur (101) de fluide réfrigérant et de fluide absorbant par séparation d'un fluide mixte; un condenseur (102) de fluide réfrigérant raccordé au générateur (101; un évaporateur (103) de fluide réfrigérant; un absorbeur (104) de fluide réfrigérant agencé pour absorber le fluide réfrigérant évaporé provenant de l'évaporateur (103). L'absorbeur (104) est raccordé au générateur (101) par une conduite d'alimentation (105) en fluide absorbant et par une conduite d'évacuation (106) de fluide mixte. Le dispositif de refroidissement comporte aussi un premier échangeur thermique (107) agencé entre le générateur (101) et l'absorbeur (104) et raccordé à la conduite d'alimentation (105) en fluide absorbant et à la conduite d'évacuation (106) de fluide mixte. Il comporte en outre un second échangeur thermique (108) raccordé à la conduite d'évacuation (106) de fluide mixte et agencé en aval du premier échangeur thermique (107). Le second échangeur thermique (108) est agencé de manière à chauffer le fluide mixte provenant du premier échangeur thermique (107) pour créer une surpression à l'intérieur de la conduite d'évacuation (106) du fluide mixte afin que le fluide mixte soit convoyé dans le générateur (101) par la conduite d'évacuation (106) à une température et à une pression favorisant la vaporisation du fluide réfrigérant. Ledit générateur (101) comporte des moyens de vaporisation (130) du fluide réfrigérant, lesdits moyens (130) étant agencés de manière à être traversé par le fluide mixte provenant du second échangeur thermique (108) de manière à vaporiser le fluide réfrigérant dans le générateur (101).

## Description

La présente invention est relative à un système de refroidissement à absorption préférablement adapté à un véhicule à moteur et comportant des moyens pour augmenter significativement le rendement du système.

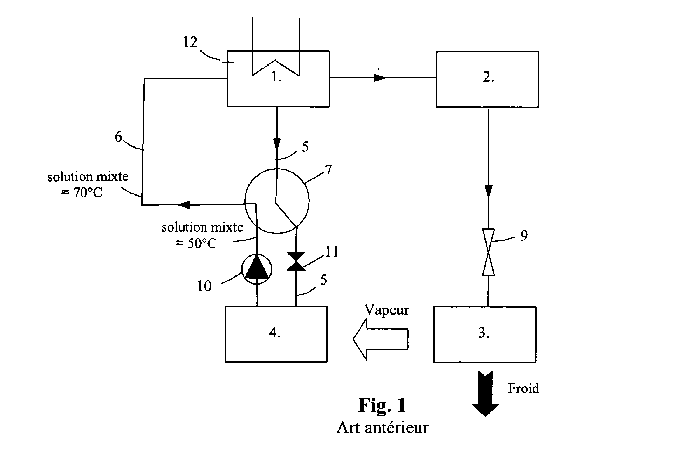

Les systèmes de refroidissement par absorption sont largement exposés dans l'état de la technique. La figure 1 illustre le principe d'un système conventionnel. Il comprend principalement un bouilleur 1 (faisant office de générateur) rempli d'une solution mixte contenant un absorbant tel que le bromure de lithium et de l'eau comme réfrigérant, un condenseur 2 raccordé au bouilleur 1, un évaporateur 3 raccordé au condenseur 2 ainsi qu'un absorbeur 4 raccordé au bouilleur 1 par une conduite d'alimentation 5 en absorbant et par une conduite d'évacuation 6 de la solution mixte. Le système comporte en outre un échangeur thermique 7 agencé entre le bouilleur 1 et l'absorbeur 4 et raccordé à la conduite d'alimentation 5 en absorbant et à la conduite d'évacuation 6 de la solution mixte. Le système comporte également une vanne d'expansion 9 agencée en aval du condenseur 2 et en amont de l'évaporateur 3, une pompe 10 (pompe à solution), une électrovanne 11 ainsi qu'un contrôleur du niveau 12 du bouilleur. Ce dernier pilote l'électrovanne 11 et la pompe 10 afin d'avoir une quantité optimale de la solution mixte dans le bouilleur 1. D'autre part, l'électrovanne 11 se ferme à l'arrêt du moteur et évite ainsi la vidange complète du bouilleur 1 dans l'absorbeur 4.

Le système est sous vide et son fonctionnement est basé sur le point triple de l'eau. L'évaporateur 3 et l'absorbeur 4 sont dotés tous deux d'une pompe (non représentée) qui recycle le réfrigérant dans l'évaporateur 3 et l'absorbeur 4 optimisant ainsi le rendement de chacun des éléments. L'absorbeur 4 est généralement refroidi par une source externe.

Pour fonctionner, la solution mixte contenue dans le bouilleur 1 (le mélange initial est d'environ 54% de bromure de lithium et 46% d'eau) est chauffée à environ 80°C. Sous l'effet de la chaleur, et aux pressions habituels de fonctionnement, l'eau bout et est vaporisée vers le condenseur 2. Celui-ci, refroidi par une intervention externe, condense la vapeur qui devient liquide. La chauffe dans le bouilleur 1 a porté dans celui-ci et dans le condenseur 2, la pression à environ 75 mbar. Le liquide produit passe à travers la vanne d'expansion 9 et arrive dans l'évaporateur 3 où la pression est à environ 7 mbar. A cette pression le liquide s'évapore et produit du froid (environ 6 °C).

Dans le bouilleur 1 il reste une solution plus riche en bromure de lithium et moins chargée en eau appelée communément solution riche. Grâce à la différence de pression entre le bouilleur 1 (75 mbar) et l'absorbeur 4, la solution riche s'écoule dans l'absorbeur 4 en passant par l'échangeur thermique 7. Dans l'absorbeur 4, la solution riche absorbe la vapeur venant de l'évaporateur 3, la solution ainsi recomposée est par la suite envoyée vers le bouilleur 1 grâce à la pompe à solution 10 et le cycle recommence.

L'échangeur thermique 7 placé entre le bouilleur 1 et l'absorbeur 4 permet l'élévation de la température de la solution mixte recomposée, d'environ 50 °C en amont de l'échangeur 7, à environ 70°C en aval de celui-ci en utilisant la solution riche comme fluide caloporteur, qui est quant à elle évacuée du bouilleur 1 pour être convoyée dans l'absorbeur 4 par la conduite d'alimentation 5 en absorbant. Par conséquent, la température de la solution riche diminue d'environ 80°C en amont de l'échangeur 7 à environ 60°C en aval de celui-ci.

La récupération de l'énergie thermique provenant de la solution riche afin de chauffer la solution mixte recomposée à une température d'environ 70°C permet d'augmenter le rendement du système. Néanmoins, à cette température et à cause de la pression existante dans la conduite d'évacuation 6, la solution recomposée commence à s'évaporer avant d'arriver dans le bouilleur 1 et la solution est encore sous forme liquide lorsqu'elle est injectée dans le générateur. Cette solution liquide doit être réchauffée dans le bouilleur à une température optimale d'ébullition afin que le cycle de production de froid puisse recommencer. Dès lors, une grande partie de l'énergie consommée par le cycle de production de froid est sous forme de chaleur fournie au niveau de générateur pour amener la solution mixte recomposée à une température optimale d'ébullition afin de séparer à nouveau le réfrigérant de l'absorbant. Le fait de réchauffer la solution liquide pour que le cycle de froid puisse recommencer est l'une des raisons principales pour le faible taux de rendement de ces systèmes qui varie en général entre 50 et 70%.

Afin d'augmenter le rendement des systèmes de refroidissement à absorption jusqu'à plus de 50%, ces derniers peuvent comporter un premier générateur couplé à un second générateur. La chaleur nécessaire au fonctionnement de la machine est introduite au niveau de premier générateur. La vapeur d'eau qui en sort vient alors céder sa chaleur de condensation au profit du second générateur. Ce dernier libère donc encore de la vapeur qui est condensée pour rejoindre l'eau issue du premier générateur avant d'être détendue puis envoyée à l'évaporateur.

Ce genre de système de refroidissement à absorption dit à deux effets, nécessite toutefois des températures plus élevées pour chauffer le premier générateur. Par ailleurs, l'encombrement des échangeurs de chaleur est plus important puisqu'il est nécessaire d'évacuer de plus grandes quantités de chaleur au cours d'un cycle de refroidissement.

Le but de la présente invention est donc de proposer un système de refroidissement à absorption peu encombrant qui à l'avantage de fournir des rendements bien supérieurs aux systèmes conventionnels.

Conformément à l'invention, ce but est atteint grâce à dispositif de refroidissement à absorption notamment pour un véhicule à moteur comportant: un générateur de fluide réfrigérant et de fluide absorbant par séparation d'un fluide mixte; un condenseur de fluide réfrigérant raccordé au générateur; un évaporateur de fluide réfrigérant, raccordé au condenseur par une conduite d'alimentation en fluide réfrigérant; un absorbeur de fluide réfrigérant agencé pour absorber le fluide réfrigérant évaporé provenant de l'évaporateur, l'absorbeur étant raccordé au générateur par une conduite d'alimentation en fluide absorbant et par une conduite d'évacuation de fluide mixte. Un premier échangeur thermique est agencé entre le générateur et l'absorbeur et raccordé à la conduite d'alimentation en fluide absorbant et à la conduite d'évacuation de fluide mixte. Le dispositif de refroidissement à absorption comporte en outre un second échangeur thermique raccordé à la conduite d'évacuation de fluide mixte et agencé en aval du premier échangeur thermique. Le second échangeur thermique est agencé de manière à chauffer le fluide mixte provenant de l'absorbeur créant ainsi une légère surpression à l'intérieur de la conduite d'évacuation du fluide mixte. Cette légère surpression permet de convoyer le fluide mixte dans le générateur par la conduite d'évacuation à une température et à une pression favorisant la vaporisation du fluide réfrigérant. Ledit générateur comporte des moyens de vaporisation du fluide réfrigérant, lesdits moyens étant agencés de manière à être traversé par le fluide mixte provenant du second échangeur thermique de manière à vaporiser le fluide réfrigérant dans le générateur.

Les caractéristiques de l'invention apparaîtront plus clairement à la lecture d'une description d'une forme d'exécution donnée uniquement à titre d'exemple, nullement limitative en se référant aux figures schématiques, dans lesquelles :
- la Figure 1 représente un système conventionnel de refroidissement à absorption;
- la Figure 2 représente un système de refroidissement à absorption selon l'invention;
- la Figure 3 représente une vue détaillée du générateur de la Figure 2.

Selon le mode d'exécution préférentiel de l'invention tel qu'illustré à la Figure 2, le système de refroidissement à absorption utilise un fluide mixte composé préférablement de bromure de lithium qui joue le rôle d'absorbant et d'eau qui joue le rôle de fluide réfrigérant. Ce système comporte, à l'instar des système de refroidissement à absorption conventionnels à "simple effet", un générateur 101 de fluide réfrigérant et de fluide absorbant par séparation du fluide mixte, un condenseur 102 de fluide réfrigérant raccordé au générateur 101, un évaporateur 103 de fluide réfrigérant raccordé au condenseur 102 ainsi qu'un absorbeur 104 de fluide réfrigérant agencé pour absorber le fluide réfrigérant évaporé provenant de l'évaporateur 103. L'absorbeur 104 est raccordé au générateur 101 par une conduite d'alimentation 105 en absorbant et par une conduite d'évacuation 106 du fluide mixte. Un premier échangeur thermique 107 est agencé entre le générateur 101 et l'absorbeur 104, cet échangeur thermique 107 étant raccordé à la conduite d'alimentation 105 en absorbant et à la conduite d'évacuation 106 du fluide mixte. La particularité de ce système de refroidissement à absorption repose sur le fait qu'il comporte en outre un second échangeur thermique 108 raccordé à la conduite d'évacuation 106 du fluide mixte et qu'il est agencé en aval du premier échangeur thermique 107. Les avantages offerts par l'utilisation de ce second échangeur thermique 108 ressortiront de la description fonctionnelle du système qui suit.

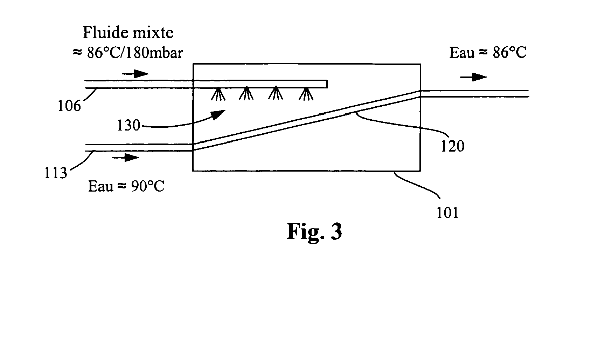

Le générateur 101 comporte de préférence une plaque chauffante inclinée 120 (Figure 3) raccordée à un échangeur de chaleur. Cette plaque 120 a pour but d'éviter tout phénomène de cristallisation du bromure de lithium après vaporisation de l'eau dans le générateur 101. Le cycle de refroidissement de ce système fonctionne de la même manière qu'un système de refroidissement à absorption conventionnel. Selon la Figure 2, l'eau vaporisée est convoyée vers le condenseur 102, dans lequel la vapeur d'eau est refroidie grâce à un circuit d'eau froide (non illustré) et liquéfié. Le fluide réfrigérant (eau) est ensuite dirigé vers l'évaporateur 103 en passant par une valve d'expansion 109. Celle-ci abaisse la pression du fluide réfrigérant de manière à provoquer son évaporation et la production de froid au niveau de l'évaporateur 103. La vapeur d'eau est alors convoyée dans l'absorbeur 104, pour y être absorbée par l'absorbant afin de recomposer le fluide mixte qui est par la suite envoyé vers le générateur 101 grâce à la pompe 110 afin que le cycle recommence.

La solution reconstituée est à environ 40°C à la sortie de l'absorbeur 104 et elle est envoyée dans le premier échangeur thermique 107 au moyen d'une pompe 110. A la sortie du premier échangeur thermique 107, la solution est à environ 75°C. Cette température ne peut être guère plus élevée puisque cet échangeur thermique 107 utilise comme fluide caloporteur l'absorbant présent dans le générateur 101 et qui retourne dans l'absorbeur 104 après évaporation de l'eau. Le premier échangeur thermique permet ainsi d'économiser qu'une partie de l'énergie nécessaire pour chauffer le fluide à régénérer.

Selon le dispositif de refroidissement à absorption couramment utilisé de nos jours (Figure 1) le premier échangeur thermique 7 est directement raccordé au générateur 1. La solution recomposée qui arrive dans le générateur est par conséquent au environ de 75°C et à une pression de 75mbar. Ces conditions de température et de pression précipitent l'ébullition d'au moins une partie de la solution recomposée avant d'arriver dans le générateur 1. Dès lors, une grande partie de l'énergie consommée par le cycle de production de froid est sous forme de chaleur fournie au niveau de générateur afin de chauffer la solution recomposée de 75°C à une température optimale d'ébullition d'environ 85°C - 90 °C.

Selon la présente invention tel qu'illustré à la Figure 2, le second échangeur thermique 108 agencé en aval du premier échangeur thermique 107 permet d'augmenter la température du fluide mixte recomposée à environ 85°C. Le conduit d'évacuation 106 du fluide mixte possède un diamètre interne constant d'environ 0.65 cm afin de créer une légère surpression à l'intérieur de ce conduit dans une plage d'environ 175 à 200 mbar. La partie du conduit d'évacuation qui se trouve à l'intérieur du générateur (Figure 3) comporte quatre orifices 130 d'un diamètre d'environ 2mm afin que la solution mixte soit vaporisée dans le générateur 101 au travers de ces orifices 130 qui remplissent la fonction de gicleur. Le second échangeur thermique 108 utilise un circuit d'eau 113 à environ 90°C qui peut être avantageusement chauffée par l'intermédiaire de capteurs solaires thermiques conventionnels 112. Ce circuit d'eau 113 est également raccordé à la plaque chauffante 120 du générateur 101 en aval de laquelle l'eau est à environ 86 °C. Le circuit 113 peut avantageusement être raccordé au circuit d'eau de refroidissement du moteur du véhicule.

Le système de refroidissement à absorption selon l'invention réside dans le fonctionnement à "sec" du générateur. On entend par fonctionnement à "sec" le fait que le générateur 101 ne contient jamais de fluide mixte sous forme liquide puisque l'eau est directement vaporisée dans celui-ci et que l'absorbant (solution plus riche en bromure de lithium et plus pauvre en eau) s'écoule au travers des gicleurs le long de la plaque chauffante 120 au fond du générateur 101 pour être directement évacué vers l'absorbeur 104. Ceci à pour avantage de simplifier le système en éliminant le contrôleur de niveau et l'électrovanne présent dans les systèmes conventionnels puisque le générateur ne comporte pas de solution liquide recomposée et de ce fait il n'est plus nécessaire de maintenir un niveau optimale du fluide dans le générateur, ni de fermer la conduite d'alimentation 105 en fluide absorbant à l'arrêt du moteur. D'autre part, le fonctionnement à sec de générateur permet d'économiser une quantité non négligeable du bromure de lithium.

## Revendications

1. Dispositif de refroidissement à absorption notamment pour un véhicule à moteur comportant:
- un générateur (101) de fluide réfrigérant et de fluide absorbant par séparation d'un fluide mixte;
- un condenseur (102) de fluide réfrigérant raccordé au générateur (101);
- un évaporateur (103) de fluide réfrigérant raccordé au condenseur (102);
- un absorbeur (104) de fluide réfrigérant agencé pour absorber le fluide réfrigérant évaporé provenant de l'évaporateur (103), l'absorbeur (104) étant raccordé au générateur (101) par une conduite d'alimentation (105) en fluide absorbant et par une conduite d'évacuation (106) de fluide mixte;
- un premier échangeur thermique (107) agencé entre le générateur (101) et l'absorbeur (104) et raccordé à la conduite d'alimentation 105) en fluide absorbant et à la conduite d'évacuation (106) de fluide mixte;
**caractérisé en ce que**
le système comporte en outre un second échangeur thermique (108) raccordé à la conduite d'évacuation (106) de fluide mixte et agencé en aval du premier échangeur thermique (107), le second échangeur thermique (108) étant agencé de manière à chauffer le fluide mixte provenant du premier échangeur thermique (107) pour créer une surpression à l'intérieur de la conduite d'évacuation (106) du fluide mixte afin que le fluide mixte soit convoyé dans le générateur (101) par la conduite d'évacuation (106) à une température et à une pression favorisant la vaporisation du fluide réfrigérant, ledit générateur (101) comportant des moyens de vaporisation (130) du fluide réfrigérant, lesdits moyens (130) étant agencés de manière à être traversé par le fluide mixte provenant du second échangeur thermique (108) de manière à vaporiser le fluide réfrigérant dans le générateur (101).

2. Dispositif de refroidissement à absorption selon la revendication 1, **caractérisé en ce qu'**une partie de la conduite d'évacuation (106) du fluide mixte se trouve à l'intérieur du générateur (101) et **en ce que** les moyens de vaporisation (130) sont agencés le long de cette partie de ladite conduite d'évacuation (106), lesdits moyens (130) étant préférablement des orifices réalisés sur ladite partie.

3. Dispositif de refroidissement à absorption selon la revendication 1 ou 2, **caractérisé en ce que** la température à l'intérieur du conduit d'évacuation (106) du fluide mixte en aval du second échangeur thermique (108) se situe entre 80 °C et 90°C lorsque le dispositif est en fonctionnement et se situe préférablement entre 84°C et 86°C.

4. Dispositif de refroidissement à absorption selon la revendication 1, 2 ou 3, **caractérisé en ce que** la pression dans le conduit d'évacuation (106) du fluide mixte en aval du second échangeur thermique (108) se situe dans une plage allant de 170 mbar à 200 mbar lorsque le dispositif est en fonctionnement.

5. Dispositif de refroidissement selon l'une quelconque des revendications précédentes, **caractérisé en ce que** le second échangeur thermique (108) est raccordé à un circuit de réchauffage (113) comportant un fluide caloporteur.

6. Dispositif de refroidissement selon la revendication 5, **caractérisé en ce que** le circuit de réchauffage (113) circule dans le générateur (101) afin d'empêcher l'absorbant de cristalliser dans ce dernier lorsque le dispositif est en fonctionnement.

7. Dispositif de refroidissement selon l'une quelconque des revendications précédentes, **caractérisé en ce que** le fluide réfrigérant est de l'eau et le fluide absorbant est du bromure de lithium.

8. Véhicule à moteur comportant le dispositif de refroidissement selon l'une quelconque des revendications précédentes.

9. Véhicule à moteur comportant le dispositif de refroidissement selon l'une quelconque des revendications 5 à 7, **caractérisé en ce que** le véhicule comporte des cellules solaires thermiques (112) destinées à chauffer le fluide caloporteur de circuit de réchauffage (113).

10. Procédé de refroidissement à absorption utilisant le dispositif de refroidissement selon l'une quelconque des revendications 1 à 7, consistant à :
- convoyer le fluide mixte dans le générateur (101) à une température et à une pression favorisant la vaporisation du fluide réfrigérant ;
- faire passer le fluide mixte au travers des moyens de vaporisation (130) pour vaporiser le fluide réfrigérant dans ledit générateur (101) et pour que le fluide absorbant résiduel s'écoule au travers desdits moyens de vaporisation (130) ;
- diriger le fluide absorbant au fond du générateur (101) pour qu'il soit directement évacué vers l'absorbeur (104).
